# NEW EUROPEAN PATENT SPECIFICATION

(11) **EP 0 484 617 B2**
(45) Date of publication and mention of the opposition decision: **12.12.2001**
(45) Mention of the grant of the patent: 19.06.1996
(21) Application number: 91105960.8
(22) Date of filing: 15.04.1991
(51) Int. Cl.: C08F 2/32

(54) **Cross-linked anionic and amphoteric polymeric microparticles**
Vernetzte, anionische und amphotere Polymer-Mikroperlen
Microperles de polymères anioniques et amphotères réticulés

(30) Priority: 11.06.1990 US 535626
(43) Date of publication of application: 13.05.1992
(73) Proprietor: Ciba Specialty Chemicals Water Treatments Limited, Bradford, West Yorkshire BD12 0JZ (GB)
(72) Inventor: Ryles, Roderick Glyn, Milford, Connecticut (US); Honig, Dan S., New Canaan, Connecticut (US); Harris, Elieth W., Bridgeport, Connecticut (US); Neff, Roger Edgar, Stamford, Connecticut (US)

(56) References cited:
- EP-A- 0 202 780
- EP-A- 0 273 605
- EP-A- 0 297 184
- EP-A- 0 374 457
- EP-A- 0 391 343
- WO-A-88/10274
- FR-A- 2 524 895
- FR-A- 2 565 592
- GB-A- 2 118 200
- US-A- 3 284 393
- US-A- 3 968 037
- US-A- 4 059 552
- Journal of Colloid and Interface Science, vol. 101, 1984, pp. 167-183
- Macromolecules, vol. 19, 1986, pp. 1895-1902

## Description

The present invention relates to structured anionic and amphoteric polymeric microparticles and a method for their preparation.

Cross-linked anionic and amphoteric, organic polymeric compositions are known to those skilled in the art and are useful in a variety of solid-liquid separation applications, particularly in the flocculation of various dispersions of suspended solids, such as sewage sludge, and in the thickening of cellulosic paper pulp suspensions. Modern concerns about environmental pollution and the increasing cost of materials have made it highly desirable to produce flocculating agents which cause higher degrees of separation at lower dosage levels.

EP 0,202,780 describes the preparation of polymeric, crosslinked, cationic acrylamide polymer beads by conventional inverse emulsion polymerization techniques. Crosslinking is accomplished by the incorporation of a difunctional monomer, such as melhylenebisacrylamide, into the polymer. This crosslinking technology is well known in the art. The patentee teaches that the crosslinked beads are useful as flocculants.

Typically, the particle size of polymers prepared by conventional inverse water-in-oil emulsion polymerization processes are limited to a range of about 1-5 µm since no particular advantage in reducing the particle size has hitherto been apparent. The precise particle size which is achievable in inverse emulsions is determined by the concentration and activity of the surfactant(s) employed and these are customarily chosen on the basis of emulsion stability and economic factors.

Leong, et al., in Inverse Microemulsion Polymerization, J. of Phys. Chem., Vol. 86, No. 23, 6-24-82, pp 2271-3, discloses polymerization of acrylamide in an inverse microemulsion. The author, also discloses having prepared crosslinked polyacrylamide latices or microgels by using a 100:1 mixture of acrylamide-methylenebisacrylamide. No anionic or amphoteric monomers are mentioned or is their use as a flocculating agent or paper-making additive.

EP 0173605 teaches the production of microbeads having a diameter ranging from about 49-87 nm and produced from terpolymers of vinyl acetate (84.6), ethyl acrylate (65.4) and acrylic acid (4.5) or methacrylonitrile (85), butyl acrylate (65) and acrylic acid (3). These polymeric beads are disclosed as added to an LBKP pulp slurry in order to evaluate the resultant paper for sizing degree, paper force enhancement and disintegratability. These polymer beads fall outside the scope of those claimed in the present invention in that the ionic content thereof is too small to impart any appreciable improvement during usage.

Additionally, U.S. - A - 4,681,912 discloses the production of microparticles of acrylamide and acrylic acid, for example, utilizing a microemulsion process. The patent, however, fails to teach the cross-linking of the particles so as to render them water-insoluble or their use in paper-making.

EP-A-0 297 184 describes a high water-absorptive resin emulsion, in which fine particles of a high water-absorptive resin are dispersed in an oil, the resin having a crosslinking density of from 0.01 to 0.5 mol% and comprising from 50 to 100% by weight of ionic monomer(s) and from 0 to 50% by weight of acrylamide, the fine particles each having a diameter of 3 µm or less.

In US-A-4 059 552 there is disclosed a viscous, short aqueous composition comprising an aqueous medium having dispersed therein from 0.1 to 2 percent by weight of microbeads of water-insoluble, water-swellable polymer of a water-soluble vinyl monomer or mixture of water-soluble vinyl monomers, cross-linked with a difunctional crosslinking agent copolymerizable with said monommer or monomers, said microbeads having diameters of from 0.2 to 4µm and having a gel capacity of at least 10 grams per gram in aqueous 0.27 molar sodium chloride solution, said polymer being cross-linked with from 50 to 1000 parts by weight of cross-linking agent per million parts of vinyl monomer or monomers in the polymer.

According to the present invention there is provided a composition obtainable by inverse microemulsion polymerization and comprising crosslinked anionic or amphoteric, organic polymeric microparticles having an unswollen number average particle size diameter of less than 0.75 µm, preferably less than about 0.5 µm, a solution viscosity of at least 1.1 mPa.s, preferably from 1.1 to 2.0 mPa.s, and a crosslinking agent content of above 4 and up to 2,000 molar parts per million, based on the monomeric units present in the polymer, and an ionicity of at least 5%.

The preferred anionic monomers for use in the practice of the present invention comprises acrylic acid, methacrylic acid, ethacrylic acid, 2-acrylamido-2-alkylsulfonic acids where the alkyl group contains 1 to 6 carbon atoms, such as 2-acrylamido-2-propane-sulfonic acid or mixtures of any of the foregoing and their alkaline salts. Especially preferred are the sodium salts of acrylic acid, methacrylic acid, and 2-acrylamido-2-methylpropane sulfonic acid.

The preferred amphoteric polymers for the use in the practice of the present invention comprise copolymers of one or more of the foregoing anionic monomers and one or more of the following cationic ethylenically unsaturated monomers selected from, for example, acryloxyethyltrimethylammonium chloride; diallydimethylammonium chloride; 3-(meth)acrylamidopropyltrimethylammonium chloride; 3-acrylamidopropyltrimethylammonium-2-hydroxypropylacrylate methosulfate; trimethylammoniumethyl methacrylate methosulfate; 1-trimethylammonium-2-hydroxypropylmethacrylate methosulfate; methacryloxyethyltrimethylammonium chloride; or mixtures of any of the foregoing.

The preferred ethylenically unsaturated non-ionic monomers for use in the practice of the present invention are selected from acrylamide; methacrylamide; N,N-dialkylacrylamides; N-alkylacrylamides; N-vinylmethacetamide; N-vinyl methylformamide; vinyl acetate; N-vinyl pyrrolidone and mixtures thereof. Especially preferred is acrylamide.

The preferred compositions encompassed by the present invention are 1) anionic monomers alone or 2) a mixture of anionic and cationic monomers, each copolymerized with the ethylenically unsaturated non-ionic monomers disclosed above. Especially preferred is acrylamide copolymerized with sodium acrylate.

Also, according to the present invention, there is provided a process for the preparation of compositions as defined above, the process comprising:
(a) admixing
   (i) an aqueous solution comprising at least one ethylenically unsaturated anionic monomer alone or in admixture with a cationic monomer, and at least one crosslinking agent in amount above 4 and up to 2,000 molar parts per million, based on monomer, and, optionally, at least one ethylenically unsaturated non-ionic monomer;
   (ii) an oily phase comprising at least one hydrocarbon liquid;
   (iii) an effective amount of surfactant or surfactant mixture, so as to form an inverse microemulsion; and
(b) subjecting the inverse microemulsion obtained in step (a) to polymerization conditions.

A preferred feature of the present invention, comprises a process employing an aqueous solution comprising sodium acrylate as the anionic monomer, N,N-methylenebisacrylamide as the crosslinking agent and acrylamide as the non-ionic monomer; an oily phase comprising a saturated hydrocarbon; and an effective amount of a surfactant mixture comprising polyoxyethylene (20) sorbitan monooleate and polyoxyethylene sorbitol hexaoleate, sufficient to produce particles of less than 0.75 µm in unswollen number average particle size diameter.

Polymerization of the inverse emulsion may be carried out by adding a polymerization initiator, such as sodium metabisulfite or tert-butyl hydroperoxide, or by subjecting the inverse emulsion to ultraviolet irradiation. Also contemplated by the present invention is adding an effective amount of chain-transfer agent to the aqueous solution of the inverse emulsion, such as an alcohol, mercaptan, phosphite, sulfite or mixture of any of the foregoing. The process of the present invention may also comprise a step for recovering the composition from the inverse emulsion.

The resultant organic polymeric particles are useful in a method of making paper from an aqueous suspension of cellulose fibers, whereby the drainage properties of the suspension are improved by including in the suspension 0.045 to 9.07 kg/907 kg (0.1 to 20 lbs/ton), based on the dry weight of paper fumish solids, of the anionic or amphoteric crosslinked organic polymer microbead having an unswollen number average particle size diameter of less than 0.75 µm, a solution viscosity of at least 1.1, preferably 1.1 to 2.0 mPa.s, a cross-linking agent content of above 4 molar parts per million, based on the monomeric units present in the polymer, and at least 5% ionicity, preferably in the presence of a molecular weight cationic polymer, as described in copending application, Serial No. Attorney Docket No. 31043), filed concurrently hereiwth.

Cross-linked, anionic or amphoteric, organic polymeric microbeads in accordance with this invention having a solution viscosity of from 1.1 to 1.5 mPa.s are generally formed by the polymerization of at least 5% of an ethylenically unsaturated anionic monomer and, for amphoteric microparticles, at least 5% of one cationic monomer, and, optionally at least one non-ionic comonomer in the presence of a crosslinking agent in a water-in-oil inverse emulsion employing an effective amount of surfactant or surfactant mixture to produce microbeads of less than 0.75 µm.

The amphoteric polymers for the use in the practice of the present invention comprise copolymers of one or more of the foregoing anionic monomers and one or more of the following cationic ethylenically unsaturated monomers (meth)acrylates of dialkylaminoalkyl compounds, and salts and quaternaries thereof and in particular monomers of N, N-dialkylaminoalkyl(neth)acrylamides, and salts and quaternaries thereof, such as N,N-dimethylaminoethyacrylamides; and the acid or quaternary salts thereof. Cationic monomers which may be used herein are of the following general formulae: 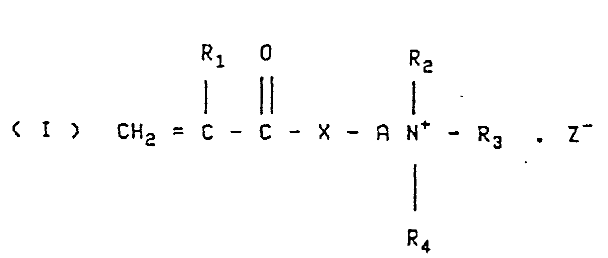 where R₁ is hydrogen or methyl, R₂ is hydrogen or lower alkyl of 1-4 carbon atoms, R₃ and/or R₄ are hydrogen, alkyl of 1-12 carbon atoms, aryl, or hydroxyethyl and R₂ and R₃, or R₃ and R₄, can combine to form a cyclic ring containing one or more hetero atoms, and Z is the conjugate base of an acid; X is oxygen or -NR₁, wherein R₁ is as defined above, and A is an alkylene group of 1-12 carbon atoms, or 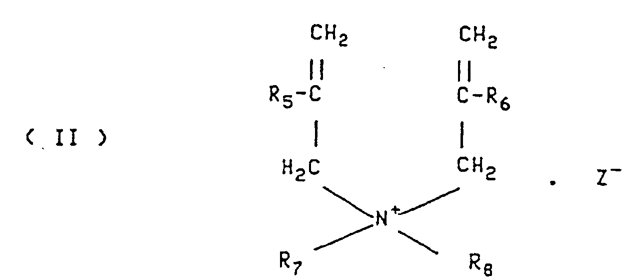 where R₅ and R₆ are hydrogen or methyl, R₇ is hydrogen or alkyl of 1-12 carbon atoms, and R₈ is hydrogen, alkyl of 1-12 carbon atoms, benzyl or hydroxyethyl; and Z is as defined above.

These ethylenically unsaturated anionic, cationic and non-ionic monomers may be copolymerized to produce anionic and amphoteric copolymers. Preferably, acrylamide is copolymerized with a anionic monomer. Anionic copolymers useful in the practice of this invention comprise from 0 to 95 parts, by weight of non-ionic monomer and 5 to 100 parts, by weight, of anionic monomer, based on the total polymer weight. Amphoteric polymers may be produced from 1-99 parts, by weight, same basis, of anionic monomer and from 99-1 parts, by weight, of cationic monomer, optionally with from 0-75 parts, by weight, of a non-ionic monomer, the total weight of the anionic monomer and cationic monomer being at least 5%. Polymerization of the monomers is conducted in the presence of a polyfunctional crosslinking agent to form the crosslinked composition. The polyfunctional crosslinking agent comprises molecules having either at least two double bonds, a double bond and a reactive group, or two reactive groups. Illustrative of those containing at least two double bonds are N,N'-methylenebisacrylamide, N,N'-methylenebismethacrylamide, polyethyleneglycol diacrylate, polyethyleneglycol dimethacrylate, N-vinyl acrylamide, divinylbenzene, triallylammonium salts and N-methylallylacrylamide. Polyfunctional branching agents containing at least one double bond and at least one reactive group include, glycidyl acrylate, acrolein and methylolacrylamide. Polyfunctional branching agents containing at least two reactive groups include aldehydes such as glyoxal, diepoxy compounds and epichlorohydrin.

Crosslinking agents are to be used in sufficient quantities to assure a crosslinked composition. At least 4 molar parts per million of crosslinking agent, based on the monomeric units present, are employed to induce sufficient crosslinking, up to 2000 molar parts per million.

The polymeric microparticles of this invention are obtainable by polymerizing the monomers in an inverse microemulsion. Polymerization in microemulsions and inverse microemulsions is known to those skilled in this art. P. Speiser reported in 1976 and 1977 a process for making spherical "nanoparticles" with diameters less than 80 nm (800Å) by (1) solubilization of polymerizable molecules, e.g. acrylamide and methylenebisacrylamide and other materials, e.g. drugs, in micelles and (2) polymerizing the monomers in the micelles. J. Pharm. Sa., 65(12), 1763 (1976) and United States Patent No. 4,021,364. Both inverse water-in-oil and oil-in-water "nanoparticles" were prepared by this process. While not specifically called microemulsion polymerization by the author, this process does contain all the features which are currently used to define microemulsion polymerization. These reports also constitute the first examples of polymerization or acrylamide in a microemulsion. Since then, numerous publications reporting polymerization of hydrophobic polymers in the oil phase of microemulsions have appeared. See, for example, Stoffer and Bone, J. Dispersion Sci. and Tech., 1(1), 37, 1980 and Atik and Thomas, J. Am. Chem. Soc'y, 103(14), 4279(1981); and GB 2161492A.

The ionic and amphoteric microemulsion polymerization process may be conducted by (i) preparing a monomer microemulsion by adding an aqueous solution of the monomers to a hydrocarbon liquid containing appropriate surfactant or surtactant mixture to form an inverse monomer microemulsion consisting of small aqueous droplets which, when polymerized, result in polymer particles of less than 0.75 µm in size, dispersed in the continuous oil phase and (ii) subjecting the monomer microemulsion to free radical polymerization.

In order to obtain an inverse microemulsion, it is generally necessary to use particular conditions whose main parameters are as follows: surfactant concentration, HLB of surfactant or surfactant mixture, temperature, nature of the organic phase and composition of the aqueous phase.

The aqueous phase comprises an aqueous mixture of the monomers, anionic or a mixture of anionic and cationic and optionally non-ionic, and the crosslinking agent, as defined above. The aqueous monomer mixture may also comprise such conventional additives as are desired. For example, the mixture may contain chelating agents to remove polymerization inhibitors, pH adjusters, initiators and other conventional additives.

Essential to the formation of the microemulsion, which may be defined as a swollen, transparent and thermodynamically stable micelle solution without agitation, comprising two liquids insoluble in each other and a surfactant, in which the micelles are much smaller than in an emulsion, is the selection of appropriate organic phase and surfactant.

The selection of the organic phase has a substantial effect on the minimum surfactant concentration necessary to obtain the inverse microemulsion. This organic phase may comprise of a hydrocarbon or hydrocarbon mixture. Saturated hydrocarbons or mixtures thereof are the most suitable in order to obtain inexpensive formulations (lower surfactant content) of inverse microemulsions. Typically, the organic phase will comprise benzene, toluene, fuel oil, kerosene, odorless mineral spirits and mixtures of any of the foregoing.

The ratio by weight of the amounts of aqueous and hydrocarbon phases is chosen as high as possible, so as to obtain, after polymerization, a microemulsion of high polymer content. Practically, this ratio may range, for example from 0.5 to 3:1, and usually is 2:1.

The one or more surfactants are selected in order to obtain an HLB (Hydrophilic Lipophilic Balance) value ranging from 8 to 11. In addition to the appropriate HLB value, the concentration of surfactant must also be optimized, i.e. sufficient to form an inverse emulsion having the correct particle size. Typical surfactants useful in the practice of this invention, in addition to those specifically discussed above, may be anionic, cationic or non-ionic and are selected from polyoxyethylene (20) sorbitan trioleate, sorbitan trioleate, sodium di-2-ethylhexylsulfosuccinate, oleamidopropyldimethylamine; sodium isostearyl-2-lactate and the like.

Polymerization of the emulsion may be carried, out in any manner known to those skilled in the art. Initiation may be effected with a variety of thermal and redox free-radical initiators including azo compounds, such as azobisisobutyronitirle; peroxides, such as t-butyl peroxide; organic compounds, such as potassium persulfate and redox couples, such as ferrous ammonium sulfate/ammonium persulfate. Polymerization may also be effected by photochemical irradiation processes, irradiation, or by ionizing radiation with a 60 Co source. Preparation of an aqueous product from the emulsion may be effected by inversion by adding it to water which may contain a breaker surfactant. Optionally, the polymer may be recovered from the emulsion by stripping or by adding the emulsion to a solvent which precipitates the polymer, e.g. isopropanol, filtering off the resultant solids, drying and redispersing in water.

The product of this invention is useful in facilitating a wide range of solid-liquid separation operations. The products of this invention may be used to dewater biologically treated suspensions, such as sewage and other municipal or industrial sludges; the drainage of cellulosic suspension, such as those found in paper production, e.g. paper waste; and the settling and dewatering of various inorganic suspensions, e.g. refinery waste, coal waste, etc.

The following examples illustrate the present invention. They are not be construed as limitations on the present invention except as set forth in the appended claims.

### Examples 1 - 5

### Procedure for the Preparation of Anionic Microemulsion

The master batch of aqueous phase is made by mixing acrylic acid (AA), as the sodium salt, 200 parts deionized water, 56.5% sodium hydroxide, crystal acrylamide (AMD), 0.3 part 10% pentasodium diethylenetriaminepentaacetate, 39.0 parts additional deionized water, and 1.5 parts of 0.518% copper sulfate pentahydrate together. To 110.2 parts of this aqueous phase solution, 6.5 parts deionized water, 0.25 part 1% t-butyl hydroperoxide and N,N-methylene bisacrylamide (MBA) are added. This aqueous phase is mixed with an oil phase containing 77.8 parts of low odor paraffin oil, 3.6 parts sorbitan sesquioleate and 21.4 parts polyoxyethylene sorbitol hexaoleate.

This emulsion is deaerated with nitrogen for 20 minutes. The polymerization is then initiated with gaseous SO₂. The polymerization is then allowed to exotherm to 40°C and is controlled at 40°C (+ 5°C) with ice water. The ice water is removed when cooling is no longer required. The nitrogen is continued for one hours. The total polymerization time is 2.5 hours.

If desired, the polymer may be recovered from the emulsion by stripping or by adding the emulsion to a solvent which precipitates the polymer, e.g. isopropanol, filtering off the resultant solids, drying and redispersing in water.

At the time of use e.g. as a paper-making additive, the recovered polymer may be dispersed in water. The emulsion, microbeads may also be directly dispersed in water. Depending on the surfactant and levels used in the emulsion dispersion may require using high a hydrophilic lipophilic balance (HLB) inverting surfactant such as an ethoxylated alcohol; polyoxyethyllated sorbitol hexaoleate; diethanolamine oleate; ethoxylated laurel sulfate etc. as in known in the art.

The procedure for preparing amphoteric emulsions e.g. 15AA/60AMD/25 dimethylaminoethylacrylate (DMEA)/349 ppm MBA, is repeated for the preparation of the anionic emulsions with the exception that the concentration of the individual monomers employed are adjusted accordingly.

Various monomers are polymerized in accordance with the above procedure. The results are set forth in Table I, below.

**Table I**

| Preparation of Anionic Microbeads | | | | | | |
|---|---|---|---|---|---|---|
| | Copolymer Compositions (Mole %) | | | MBA | PS | SV |
| Example | AMD | AA | NaAPS | PPM | NM | mPa.s |
| 1 | 70 | 30 | - | 349 | 130 | 1.19 |
| 2 | 40 | 60 | - | 1381 | 120 | 1.10 |
| 3 | 0 | 100 | -- | 1985 | 80 | 1.35 |
| 4 | 70 | -- | 30 | 995 | -- | 1.37 |
| 5 | 70 | - | 30 | 10,086 | -- | 1.15 |
| 6 | 70 | 30 | -- | 1000 | 464 | -- |
| 7 | 70 | 30 | - | 1000 | 149 | 1.02 |
| 8 | 70 | 30 | - | 1000 | 106 | 1.06 |
| NaAPS = Sodium 2-Acrylamido-2-methylpropane Sulfonic Acid | | | | | | |
| PS = Number Average Particle Size in Nanometers | | | | | | |
| SV = Solution Viscosity (0.1% polymer in M NaCI, 25°C using a Brookfield UL adapter at 60 rpm) | | | | | | |

### Example 9

In paper making processes it is found that the addition of anionic microbeads, preferably with a high molecular weight cationic polymer to a conventional paper making stock increases the drainage rate of water from the paper. The following examples illustrate this utility but are not to be construed to limit the invention in any manner whatsoever.

A 70/30 hardwood/softwood bleached kraft pulp is used containing 25% CaCO₃ for alkaline papermaking at a pH of 8.0 Drainage is a measure of the time required for a certain volume of water to drain through the paper and is here measured as alOX drainage. (K. Britt, TAPPI 63(4) p67 (1980). Hand sheet are prepared on a Noble and Wood sheet machine. In the test examples, the linear cationic copolymer is a 10 mole % of acryloxyethyttrimethylammonium chloride (AETMAC) and 90 mole % of acrylamide (AMC) of 5,000,000 to 10,000,000 mol. wt. with a charge density of 1.2 meg. /g. and SV-4.0 mPa·s (SV-4.0 cps). The anionic microbeads in Table II are added separately to the thin paper stock. The cationic polymer is added to the test furnish in a "Vaned Britt Jar" and subjected to 800 rpm stirring for 30 seconds. The anionic microbead is then added and subjected to 800 rpm stirring for 30 seconds and then drainage times are measured. The results of testing are set forth in Table II, below.

**Table II**

| Drainage Aid Test Data | | | | | |
|---|---|---|---|---|---|
| Example | Cationic Polymer | Dosage kg/907 kg (lb/ton) | Anionic Polymer Microbead of Example No. | Dosage kg/907 kg (Ib/ton) | Drainage Time (Sec) |
| 6 | -0- | | -- | | 161.1 |
| 7 | 10 AETMAC/ 90 AMD | 0.907(2) | | | 116.9 |
| 8 | do | 0.907(2) | -1- | 0.227 (0.5) | 75.8 |
| 9 | do | 0.907(2) | -1- | 0.454 (1.0) | 72.1 |
| 10 | do | 0.907(2) | -1- | 0.907 (2.0) | 84.3 |
| 11 | do | 0.907(2) | -2- | 0.227 (0.5) | 66.3 |
| 12 | do | 0.907(2) | -2- | 0.454 (1.0) | 72.4 |
| 13 | do | 0.907(2) | -2- | 0.907 (2.0) | 74.7 |
| 14 | do | 0.907(2) | -3- | 0.227 (0.5) | 78.8 |
| 15 | do | 0.907(2) | -3- | 0.454 (1.0) | 74.1 |
| 16 | do | 0.907(2) | -3- | 0.907 (2.0) | 80.2 |
| 17 | do | 0.907(2) | -4- | 0.227 (0.5) | 95.0 |
| 18 | do | 0.907(2) | -4- | 0.454 (1.0) | 86.6 |
| 19 | do | 0.907(2) | -4- | 0.907 (2.0) | 95.5 |
| 20 | do | 0.907(2) | -5- | 0.227 (0.5) | 119.7 |
| 21 | do | 0.907(2) | -5- | 0.454 (1.0) | 121.8 |
| 22 | do | 0.907(2) | -5- | 0.907 (2.0) | 111.4 |

The drainage time for the untreated alkaline paper stock is 161.1 seconds. Addition of the linear, cationic polymer, 10 AETMAC/90 AMD, at a level of 0.907 kg/907 kg (2 Ibs/ton) decreases the drainage time to 116.9. Further decreases in drainage time are obtained by the joint addition of the anionic microbeads of this invention of doses of 0.227, 0.454 and 0.907 kg/907 kg (0.5, 1.0 and 2.0 lbs/ton) with the 0.907 kg/907 kg (2lbs/ton) of the cationic polymer. The microbead 70 AMD/30 Na AMPS/10,086 ppm MBA has little effect on drainage due to the excessively high degree of cross-linking and is outside the scope of this invention. The higher degree anionicity of 2 microbeads (40 AMD/60 AA/1381 ppm MBA-120nm and 100AA/1985 ppm MBA-80 nm) improves drainage time over those of the lower degree of anionicity microbeads 70 AMD/30 NaAPS/995 ppm MBA. The 0.454 kg/907 kg (1.0 lb/ton) dosage of anionic microbead gives better drainage times than either the 0.227 or 0.907 kg/907 kg (0.5 or 2.0 lbs/ton) dosage. The only exception is with the microbead 40AMD/60 AA/1,381 ppm MBA where the 0.227 kg/907 kg (0.5 Ib/ton) dosage is the most desirable.

### Examples 23 - 27

Anionic microbeads of 5 and 10 mole percent of anionic charge and amphoteric microbeads with a mole % higher anionic charge than cationic charge are made by the procedure of Example 1 and are shown in Table III. The microbeads have a particle size under 0.5 µm in Examples 23-27.

**Table III**

| Preparation of Anionic and Amphoteric Microbeads | | | | | | | |
|---|---|---|---|---|---|---|---|
| | Copolymer Compositions (Mole %) | | | | MBA | PS | SV |
| Example | AMD | NaAC | NaAPS | DMEA | ppm | NM | mPa.S |
| 23 | 90 | 10 | -- | -- | 496 | -- | 1.34 |
| 24 | 95 | 5 | -- | - | 97 | -- | 1.89 |
| 25 | 85 | -- | 10 | 5 | 1026 | -- | 1.40 |
| 26* | 55 | -- | 25 | 20 | 5101 | -- | 1.59 |
| 27* | 60 | -- | -- | 40 | 100 | 100 | -- |
| DMEA = Acryloxylethyltrimethylammonium Chloride | | | | | | | |

| | | | | | | | |
|---|---|---|---|---|---|---|---|
| *=comparative example See Table I for other legends | | | | | | | |

### Example 28

The anionic and amphoteric microbeads of Table III are used in the paper making process described in Example 2. The results are substantially the same.

### Examples 29-33

The procedure of Example 1 is again followed except that different monomers are employed in the preparation of the micorbead. The results are set forth in Table IV, below.

**Table IV**

| Example | Non-Ionic Monomer (%) | Anionic Monomer (%) | MBA PPM |
|---|---|---|---|
| 29 | AM-50 | MMA-50 | 117 |
| 30 | AM-65 | VSA-35 | 226 |
| 31 | AM-75 | DADM-25 | 198 |
| 32 | -- | NaAPS-100 | 316 |
| 33 | MAM-90 | AA-10 | 441 |
| MAM = methacrylamide MMA = methacrylic acid VSA = vinylsulfonic acid DADM = diallydimethylammonium chloride | | | |

Many variations of the present invention will suggest themselves to those skilled in this art in light of the above detailed description. Chain-transfer agents may be optionally added to the monomer solution. Also contemplated are all dewatering processes.

## Claims

1. A composition obtainable by inverse microemulsion polymerization and comprising crosslinked anionic or amphoteric, organic polymeric microparticles, said microparticles having an unswollen number average particle size diameter of less than 0.75 µm, a solution viscosity of at least 1.1 mPa.s and a crosslinking agent content of above 4 and up to 2,000 molar parts per million, based on the monomeric units present in the polymer, and an ionicity of at least 5.0%.

2. The composition as defined in Claim 1 wherein said crosslinking agent is a difunctional monomer selected from N,N'-methylenebisacrylamide, N,N'-methylenebismethacrylamide, polyethyleneglycol dimethacrylate, polyethyleneglycol diacrylate, N-vinyl acrylamide, glycidyl acrylate, divinylbenzene, acrolein, aldehydes, diepoxy compounds, epichlorohydrin and mixtures of the foregoing.

3. The composition as defined in Claim 2, wherein said aldehyde is glyoxal.

4. The composition as defined in Claim 2 wherein said crosslinking agent comprises N,N'-methylenebisacrylamide.

5. The composition as defined in Claim 1 wherein said unswollen diameter is less than 0.5 µm.

6. The composition as defined in Claim 1 wherein the organic polymer microparticle is composed of at least one anionic monomer selected from acrylic acid, methylacrylic acid, ethylacrylic acid, 2-acrylamido-2-methylpropanesulfonic acid or mixtures or salts thereof.

7. The composition as defined in Claim 1 wherein the organic polymer microparticle is amphoteric and is composed of from 1 % to 99% of an anionic monomer selected from acrylic acid, methacrylic acid, ethacrylic acid, 2-acrylamido-2-methylpropane sulfonic acid or salts thereof and from 99% to 1% of a cationic monomer selected from acryloxyethyltrimethylammonium chloride, 3-methacrylamidopropyltrimethylammonium chloride, diallydimethylammonium chloride and mixtures thereof.

8. The composition as defined in Claim 1 wherein said organic polymer microparticle is composed of sodium acrylate and acrylamide.

9. A process for the preparation of a composition as defined in Claim 1, said process comprising:
(a) admixing
(i) an aqueous solution comprising at least one ethylenically unsaturated anionic monomer alone or in admixture with a cationic monomer, and at least one crosslinking agent in amount above 4 and up to 2,000 molar parts per million, based on monomer, and, optionally, at least one ethylenically unsaturated non-ionic monomer;
(ii) an oily phase comprising at least one hydrocarbon liquid;
(iii) an effective amount of surfactant or surfactant mixture, so as to form an inverse microemulsion; and
(b) subjecting the inverse microemulsion obtained in step (a) to polymerization conditions.

10. The process as defined in Claim 8 wherein said monomer solution of step (a)(i) comprises sodium acrylate as said anionic monomer, N,N-methylenebisacrylamide as said crosslinking agent and acrylamide as said non-ionic monomer.

11. The process as defined in Claim 8 wherein said aqueous solution of step (a)(i) additionally contains an effective amount of a chain-transfer agent selected from an alcohol, mercaptan, phosphite, sulfite, or a mixture thereof.

## Patentansprüche

1. Zusammensetzung, erhältlich durch Polymerisation einer inversen Mikroemulsion, und umfassend vernetzte anionische oder amphotere, organische polymere Mikropartikel, wobei die Mikropartikel einen numerischen Durchschnittspartikelgrößendurchmesser im ungequollenen Zustand von weniger als 0,75 µm, eine Lösungsviskosität von mindestens 1,1 mPa·s und einen Vernetzungsmittelgehalt von über 4 und bis zu 2000 Molteilen pro Million, bezogen auf die Monomereinheiten in dem Polymer, und eine Ionizität von mindestens 5,0 % aufweisen.

2. Zusammensetzung gemäß Anspruch 1, bei der das Vernetzungsmittel ein bifunktionelles Monomer ausgewählt aus N,N'-Methylenbisacrylamid, N,N'-Methylenbismethacrylamid, Polyethylenglycoldimethacrylat, Polyethylenglycoldiacrylat, N-Vinylacrylamid, Glycidylacrylat, Divinylbenzol, Acrolein, Aldehyden, Diepoxyverbindungen, Epichlorhydrin und Mischungen aus den vorhergehenden ist.

3. Zusammensetzung gemäß Anspruch 2, bei der das Aldehyd Glyoxal ist.

4. Zusammensetzung gemäß Anspruch 2, bei der das Vernetzungsmittel N,N'-Methylenbisacrylamid enthält.

5. Zusammensetzung gemäß Anspruch 1, bei der der Durchmesser im ungequollenen Zustand weniger als 0,5 µm beträgt.

6. Zusammensetzung gemäß Anspruch 1, bei der das organische Polymermikropartikel aus mindestens einem anionischen Monomer ausgewählt aus Acrylsäure, Methacrylsäure, Ethylacrylsäure, 2-Acrylamido-2-Methylpropansulfonsäure oder Mischungen oder Salzen davon zusammengesetzt ist.

7. Zusammensetzung gemäß Anspruch 1, bei der das organische Polymermikropartikel amphoter ist und aus 1 % bis 99 % eines anionischen Monomers ausgewählt aus Acrylsäure, Methacrylsäure, Ethacrylsäure, 2-Acrylamido-2-Methylpropansulfonsäure oder Salzen davon und 99 % bis 1 % eines kationischen Monomers ausgewählt aus Acryloxyethyltrimethylammoniumchlorid, 3-Methacrylamidopropyltrimethylammoniumchlorid, Diallyldimethylammoniumchlorid und Mischungen davon zusammengesetzt ist.

8. Zusammensetzung gemäß Anspruch 1, bei der das organische Polymermikropartikel aus Natriumacrylat und Acrylamid zusammengesetzt ist.

9. Verfahren zur Herstellung einer Zusammensetzung gemäß Anspruch 1, wobei das Verfahren umfaßt:
(a) Mischung von
(i) einer wäßrigen Lösung mit mindestens einem ethylenisch ungesättigten anionischen Monomer allein oder vermischt mit einem kationischen Monomer, und mindestens einem Vernetzungsmittel in einer Menge von über 4 und bis zu 2000 Molteilen pro Million, bezogen auf Monomer, und wahlweise mindestens einem ethylenisch ungesättigten nichtionischen Monomer;
(ii) einer öligen Phase mit mindestens einer Kohlenwasserstoffflüssigkeit;
(iii) einer wirksamen Menge an Tensid oder Tensidmischung, um eine inverse Mikroemulsion zu bilden; und
(b) Aussetzen der in Schritt (a) erhaltenen inversen Mikromulsion Polymerisationsbedingungen.

10. Verfahren gemäß Anspruch 8, wobei die Monomerlösung von Schritt (a) (i) Natriumacrylat als das anionische Monomer, N,N-Methylenbisacrylamid als das Vernetzungsmittel und Acrylamid als das nichtionische Monomer enthält.

11. Verfahren gemäß Anspruch 8, wobei die wäßrige Lösung von Schritt (a) (i) zusätzlich eine wirksame Menge eines Kettenübertragungsmittels ausgewählt aus einem Alkohol, Mercaptan, Phosphit, Sulfit oder einer Mischung davon enthält.

## Revendications

1. Composition pouvant être obtenue par polymérisation en micro-émulsion inverse et comprenant des microparticules de polymère organique, anionique ou amphotère, réticulé, lesdites micro-particules ayant un diamètre particulaire moyen en nombre à l'état non gonflé, inférieur à 0,75µm une viscosité en solution d'au moins 1,1 mPa.s. et une teneur en agent de réticulation supérieure à 4 parties en moles par million, et pouvant aller jusqu'à 2000 parties en moles par million, par rapport aux motifs monomères présents dans le polymère, ainsi qu'une ionicité d'au moins 5,0%.

2. Composition selon la revendication 1, dans laquelle l'agent de réticulation est un monomère difonctionnel choisi parmi le N,N'-méthylènebisacrylamide, le N,N'-méthylènebisméthacrylamide, le diméthacrylate de polyéthylène glycol, le diacrylate de polyéthylène glycol, le N-vinyl acrylamide, l'acrylate de glycidyle, le divinylbenzène, l'acroléine, les aldéhydes, les composés diépoxydés, l'épichlorhydrine et les mélanges de ceux-ci.

3. Composition selon la revendication 2, dans laquelle l'aldéhyde est le glyoxal.

4. Composition selon la revendication 2, dans laquelle l'agent de réticulation comprend du N,N-méthylènebisacrylamide.

5. Composition selon la revendication 1, dans laquelle le diamètre à l'état non gonflé est inférieur à 0,5µm.

6. Composition selon la revendication 1, dans laquelle la microparticule de polymère organique, est dérivée d'au moins un monomère anionique choisi parmi l'acide acrylique, l'acide méthacrylique, l'acide éthylacrylique, l'acide 2-acrylamido-2-méthylpropane-sulfonique, leurs mélanges ou leurs sels.

7. Composition selon la revendication 1, dans laquelle la microparticule de polymère organique, est amphotère, et est de 1% à 99% d'un monomère anionique choisi parmi l'acide acrylique, l'acide méthacrylique, l'acide éthacrylique, l'acide 2-acrylamido-2-méthylpropane sulfonique ou leurs sels, et de 99% à 1% d'un monomère cationique choisi parmi le chlorure d'acryloxyéthyltriméthylammonium, le chlorure de 3-méthacrylamidopropyltriméthylammonium, le chlorure de diallyldiméthylammonium et leurs mélanges.

8. Composition selon la revendication 1, dans laquelle la microparticule de polymère organique, est dérivée d'acrylate de sodium et d'acrylamide.

9. Procédé de préparation d'une composition telle que définie dans la revendication 1, ledit procédé comprenant les étapes consistant à :
(a) mélanger :
(i) une solution aqueuse comprenant au moins un monomère anionique à insaturation éthylénique seul ou en mélange avec un monomère cationique, et au moins un agent de réticulation, à raison de plus de 4 jusqu'à 2000 parties en moles par million par rapport au monomère, et, éventuellement, au moins un monomère non ionique à insaturation éthylénique ;
(ii) une phase huileuse comprenant au moins un hydrocarbure liquide ;
(iii) une quantité efficace d'un tensioactif ou d'un mélange de tensioactifs, de façon à former une émulsion inverse ; et
(b) soumettre la microémulsion inverse obtenue dans l'étape (a) à des conditions de polymérisation.

10. Procédé selon la revendication 8, dans lequel la solution de monomères de l'étape (a) (i), comprend de l'acrylate de sodium en tant que monomère anionique, du N,N-méthylènebisacrylamide en tant qu'agent de réticulation et de l'acrylamide en tant que monomère non ionique.

11. Procédé selon la revendication 8, dans lequel la solution aqueuse de l'étape (a) (i), contient en outre, une quantité efficace d'un agent de transfert de chaîne choisi parmi un alcool, un mercaptan, un phosphite, un sulfite ou un mélange de ceux-ci.
